# EUROPEAN PATENT SPECIFICATION

(11) **EP 4 403 688 B1**
(45) Date of publication and mention of the grant of the patent: **24.06.2026**
(21) Application number: 22926313.2
(22) Date of filing: 16.12.2022
(51) Int. Cl.: D06F 39/10, B01D 29/88, B01D 39/16, D06F 39/08, B01D 29/03, B01D 29/05, B01D 29/56, B01D 29/90, B01D 35/30, B01D 39/14, B01D 39/20

(54) **FILTER ASSEMBLY AND WASHING MACHINE COMPRISING SAME**
FILTERANORDNUNG UND WASCHMASCHINE DAMIT
ENSEMBLE FILTRE ET LAVE-LINGE LE COMPRENANT

(30) Priority: 09.12.2022 KR 20220171205
(43) Date of publication of application: 24.07.2024
(73) Proprietor: Microfilter Co., Ltd., Chungcheongbuk-do 27856 (KR)
(72) Inventor: JOUNG, Whi Dong, Seoul 06544 (KR); LEE, Hyung Gue, Cheongju-si, Chungcheongbuk-do 28791 (KR); KIM, Dong Hyun, Gongju-si, Chungcheongnam-do 32541 (KR); LEE, Kyong Su, Hwaseong-si, Gyeonggi-do 18396 (KR); PARK, Jin Geun, Gyeonggi-do 12553 (KR)
(74) Representative: BCKIP Part mbB
(86) International application number: PCT/KR2022/020534
(87) International publication number: WO 2024/122712

(56) References cited:
- CN-A- 112 011 971
- JP-A- 2011 224 228
- JP-A- 2013 223 547
- KR-A- 20110 013 059
- KR-A- 20200 096 279
- KR-B1- 102 471 320
- US-A1- 2012 186 306
- US-A1- 2014 102 154
- US-A1- 2022 228 310

## Description

### [Technical Field]

The present invention relates to a filter assembly and a washing machine including the same, and more particularly, to a filter assembly capable of filtering washing water when applied to a home appliance for clothes, and a washing machine including the same.

### [Background Art]

In general, a laundry treating apparatus collectively refers to a washing machine which removes dirt from clothes, bedding, or the like (hereinafter referred to as 'cloth') using water, detergent, and mechanical action, a dryer which dries wet cloth using dry hot air heated by a heater and mechanical action, a washing machine-cum-dryer with both washing and drying functions, a refresher which sprays heated steam onto laundry to prevent allergy caused by the cloth, and various other apparatuses which process cloth by applying physical and chemical actions to the cloth.

Additionally, the washing machine may be classified as a top-load type washing machine in which a cloth entrance hole through which cloth comes in and out is formed on the upper surface of the cabinet and washing is performed by the rotational water flow generated when the washing tub rotates, and a drum washing machine in which a cloth entrance hole is formed on the front surface of the cabinet and washing is performed by the fall of the cloth when the drum rotates.

A conventional top-load type washing machine includes a cabinet with its top surface open which forms the external appearance, a base installed at the bottom of the cabinet, an outer tub installed inside the cabinet to store water, a washing tub disposed inside the outer tub to perform washing of cloth, a driving device disposed at the bottom of the washing tub and including a motor for rotating the washing tub, a water supply device for supplying water into the outer tub, and a drainage device for draining the water in the outer tub.

Meanwhile, synthetic fibers are increasingly spread and used widely in recent years. As a result, the amount of fine synthetic microfibers is proliferated in wastewater and surrounding environments, further increasing environmental pollution. In particular, synthetic microfibers are produced/discharged during the washing process of non-biodegradable synthetic fibers, resulting in greater water pollution by fine plastics.

Thus, there is a concern that various fine dust (fine plastic laundry dust, fiber dust, yellow dust, heavy metals, radioactive substances, fine dust, other harmful bacteria, or the like) discharged from laundry such as clothes or the like is discharged to the outside while remaining in the washing water, thereby contaminating the environment.

Korean Patent No. 10-2179793 discloses an apparatus for filtering drainage of washing machine.

Document US 2012 / 0 186 306 A1 discloses a washing machine including a tub containing wash water, a pump case, and a pump filter. The pump case includes an inflow chamber into which the wash water in the tub flows, a circulation pump chamber provided at one side of the inflow chamber to supply wash water to the tub, and a drain pump chamber provided at the other side of the inflow chamber to discharge the wash water to the outside of a main body. The pump filter is installed in the inflow chamber to filter out foreign substances from the wash water, wherein the pump filter includes a first filter part to pass water flowing into the circulation pump chamber and a second filter part to pass wash water flowing into the drain pump chamber, and wherein the first filter part includes a blocking wall to prevent the wash water from rectilinearly flowing into the circulation pump chamber and to guide detouring of the wash water.

Document CN 112 011 971 A discloses a lint filter and a drum type washing machine using the filter capable of easily removing collected dust without touching the user. The lint filter has a filter body provided with a filter surface for collecting dust when washing water is passed, and a movable member which is movable along a filter surface of the filter body and scrapes off dust adhering to the filter surface by moving along the filter surface. The filter surface of the filter body is a rib-shaped filter formed by a plurality of ribs extending in the vertical direction, and the movable member moves vertically along the rib.

### [Summary of the Invention]

### [Technical Problem]

The present invention has been conceived to address the above-described technical drawbacks, and its object is to provide a filter assembly and a washing machine including the same, the assembly being capable of making it possible to use the filtering device more effectively for a long time by providing a structure that can easily remove residues such as fine fiber plastics which may be accumulated in the filtering device mounted on the drainage region of a home appliance for clothes.

Additionally, another object of the present invention is to provide a filter assembly capable of preventing the introduction of foreign substance and the like flowing backward and improving filtration efficiency, and a washing machine including the same, by improving the structure to prevent back flow of foreign substances and the like such as fine fiber plastics and the like contained in the washing water flowing in the filtration device of a home appliance for clothes.

The technical drawbacks which this invention addresses are not limited to the aforementioned ones, but unmentioned other technical drawbacks which can be solved by this invention will become apparent to those skilled in the art from the description below.

### [Solution to Problem]

In order to achieve the above-mentioned objects, the present invention provides a filter assembly in accordance with claim 1 and a washing machine in accordance with claim 12.

A filter assembly according to the present invention includes a first filter case in which at least one inlet and an outlet are formed as independent flow paths, respectively, on one side thereof so that a washing water is introduced thereinto from the outside and then discharged therefrom while foreign substances are filtered out, and in which an inner space for receiving the washing water is formed; a second filter case disposed spaced apart by a predetermined distance from at least one surface of the inner peripheral surfaces of the first filter case, and provided with at least one filter part; and a foreign substance prevention part provided to open and close the inlet and preventing the foreign substances from being introduced into the inlet.

In an embodiment of the present invention, the foreign substance prevention part may be formed in a plate-shaped plate shape or valve form. According to the invention, the foreign substance prevention part includes a structure in which it is opened and closed, with at least a part thereof fixed, by the water pressure of the washing water, that is, the flow direction of the water.

In an embodiment of the present invention, the foreign substance prevention part may include, as at least a portion thereof, a rubber material, silicone or mesh which provides a predetermined resilient restoring force.

In an embodiment of the present invention, the foreign substance prevention part may include a structure formed at an inlet region of the washing water introduced into the second filter case or disposed on a path of the inlet.

In an embodiment of the present invention, the filter part of the second filter case may be fixedly or detachably coupled to a filter mounting member forming an upper surface of the second filter case, and the washing water may be filtered in the filter part, flow into a distance part by the distance spaced apart from the first filter case, and be discharged to the outlet.

Here, in an embodiment of the present invention, the filter mounting member may include a filter mesh-shaped frame part to allow the washing water to flow therethrough; and
at least one separation prevention structure extending from one side of the frame part.

In an embodiment of the present invention, the separation prevention structure may include a structure extending from one side of the frame part and in close contact with an upper inner surface of the first filter case.

In an embodiment of the present invention, one surface of the first filter case may be open, and the second filter case may include a structure capable of being inserted into or extracted from an open region of the first filter case.

In an embodiment of the present invention, the filter assembly may further include a residual water prevention structure for preventing leakage of the washing water, which is formed on a lower surface of the first filter case.

In an embodiment of the present invention, the filter part may be formed of a sheet material of fabric, plastic, SUS or metal, and may include a mesh structure.

In an embodiment of the present invention, the filter part may be formed in a structure capable of filtering out fine particles having a fine dimension less than 5 mm.

Meanwhile, the present invention provides a washing machine including the filter assembly, the washing machine including a washing machine housing constituting an external appearance of the washing machine, a laundry accommodation body which is disposed inside the washing machine housing and rotatably formed, and into which washing water supplied from the outside is introduced, a discharge pipe which forms a fluid communication between the washing machine housing and the laundry accommodation body, and through which the washing water discharged from the laundry accommodation body flows, and a filter assembly disposed on the discharge pipe,
wherein the filter assembly includes a first filter case having at least one inlet and at least one outlet formed on one side of the first filter case so that washing water is introduced thereinto from the outside, and then is filtered and discharged therefrom independently; and
a foreign substance prevention part provided to open and close the inlet and suppressing the foreign substances from being introduced into the inlet.

### [Advantageous Effects of Invention]

The filter assembly according to the present invention, and a washing machine including the same provide a following advantageous effect: it is possible to use the filtering device more effectively for a long time by providing a structure that can easily remove residues such as fine fiber plastics which may be accumulated in the filtering device mounted on the drainage region of a home appliance for clothes.

Additionally, the filter assembly according to the present invention and the washing machine including the same provide a following advantageous effect: it is possible to prevent the introduction of foreign substances or the like such as fine fiber plastics or the like included in the washing water flowing backward and improve filtration efficiency, by improving the structure to prevent back flow of foreign substances and the like such as fine fiber plastics and the like contained in the washing water flowing in the filtration device of a home appliance for clothes.

### [Brief Description of Drawings]

FIG. 1 shows a transparent perspective view of a washing machine to which a filter assembly according to an embodiment of the present invention is applied,
FIGS. 2 to 4 show views representing a filter assembly according to an embodiment of the present invention,
FIG. 5 shows assembled and exploded perspective views of a filter assembly according to an embodiment of the present invention,
FIGS. 6 to 9 show cross-sectional views of a filter assembly to which a foreign substance prevention part according to an embodiment of the present invention is applied,
FIG. 10 shows a partially enlarged view representing a filter assembly and a residual water prevention structure according to an embodiment of the present invention, and
FIGS. 11 and 12 show enlarged views representing a filter case and a separation prevention structure according to an embodiment of the present invention.

### [Description of Embodiments]

Hereinafter, an embodiment of the present invention will be described in detail with reference to the accompanying drawings.

In adding reference numerals to components of each drawing, it should be noted that the same components have the same reference numerals as much as possible even if they are shown on different drawings. In addition, in describing an embodiment of the present invention, if it is determined that a detailed description of a related known configuration or function may prevent the understanding of the present invention, the detailed description thereof will be omitted.

In describing the components of an embodiment of the present invention, terms such as first, second, A, B, (a), (b), and the like may be used. These terms are only used to distinguish the component from other components, and the nature, sequence, or order of the corresponding component is not limited by the term. Further, unless otherwise defined, all terms used herein, including technical or scientific terms, have the same meaning as commonly understood by a person of ordinary skill in the art to which the present invention pertains. Terms as defined in a commonly used dictionary should be interpreted as having a meaning consistent with the meaning in the context of the related technology, and are not to be interpreted as an ideal or excessively formal meaning unless explicitly defined in this application.

An inlet and an outlet described below may mean regions, that is, holes, where fluid flowing in the filter assembly is first introduced and finally discharged, respectively.

As described above, in the case of a clothes washing machine, when used for a long time, most of the fine plastics discharged from textile clothes may be laminated onto a filter mounted on the discharge region. Therefore, the present invention can significantly improve the life span of the filter as well as remove foreign substances such as fine plastics or the like by improving the mounting location and filtering direction of the filter.

Furthermore, according to the present invention, the filtration efficiency can be effectively achieved by improving the structure so that the washing water introduced into the filter can be stably introduced thereinto in one direction.

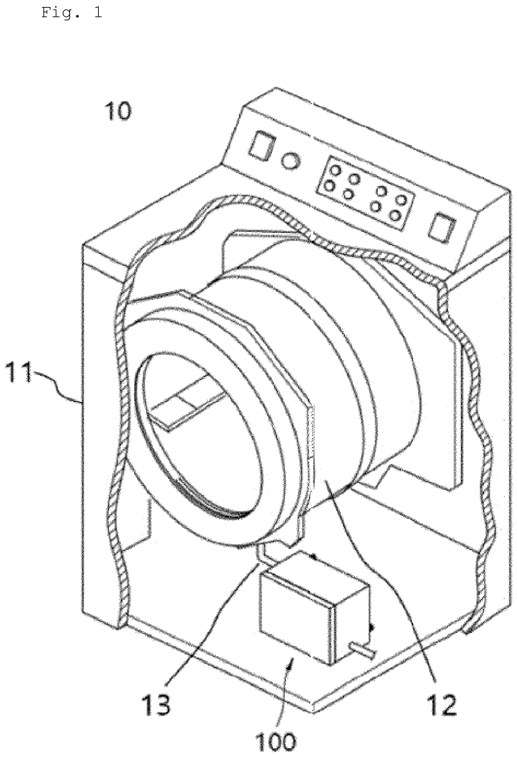

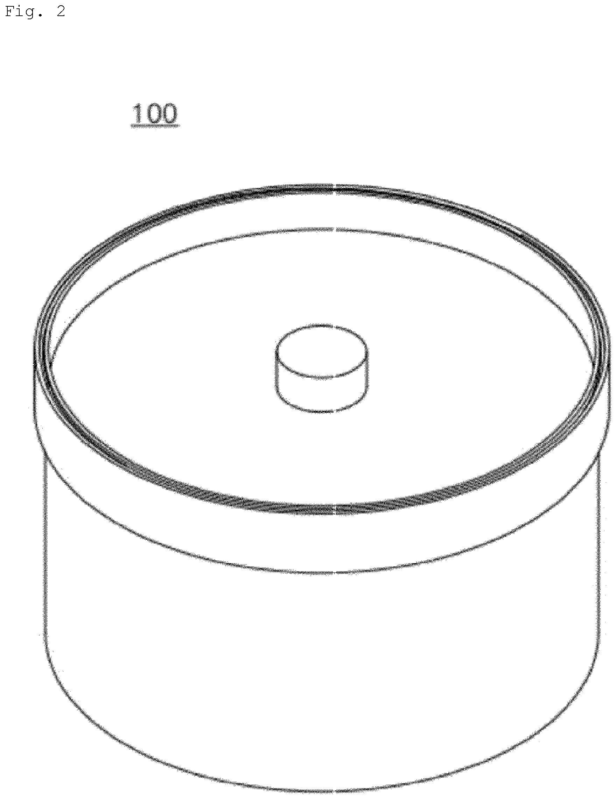

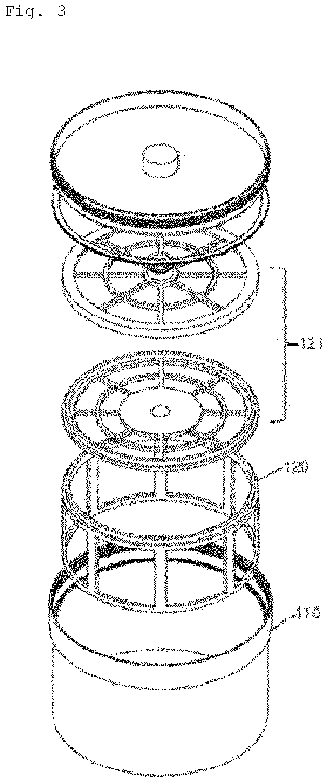

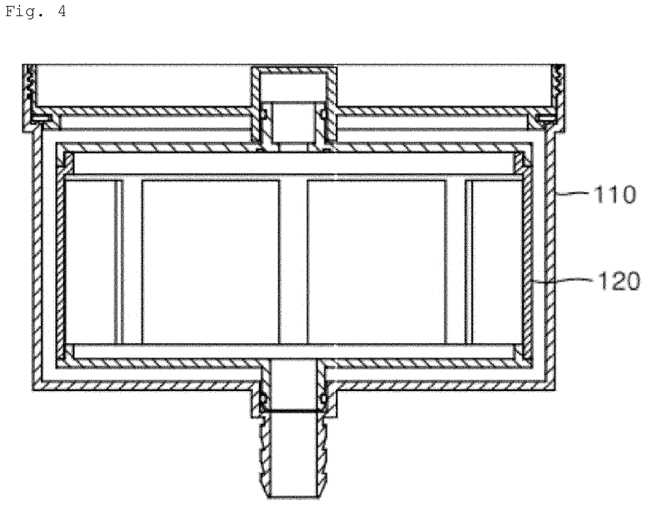

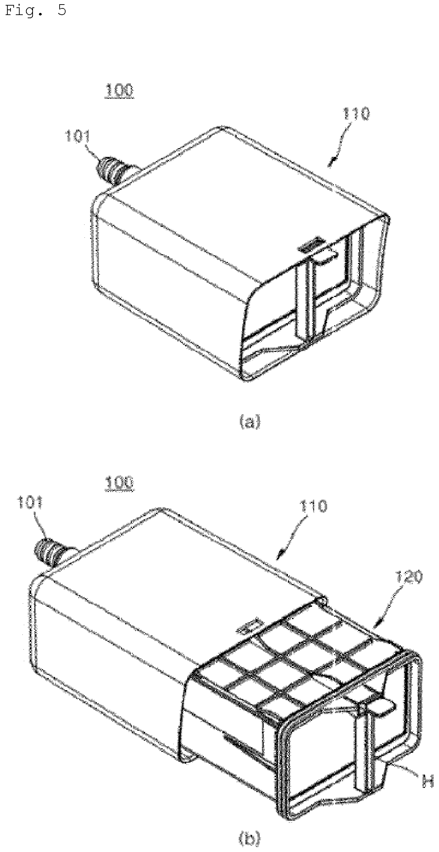

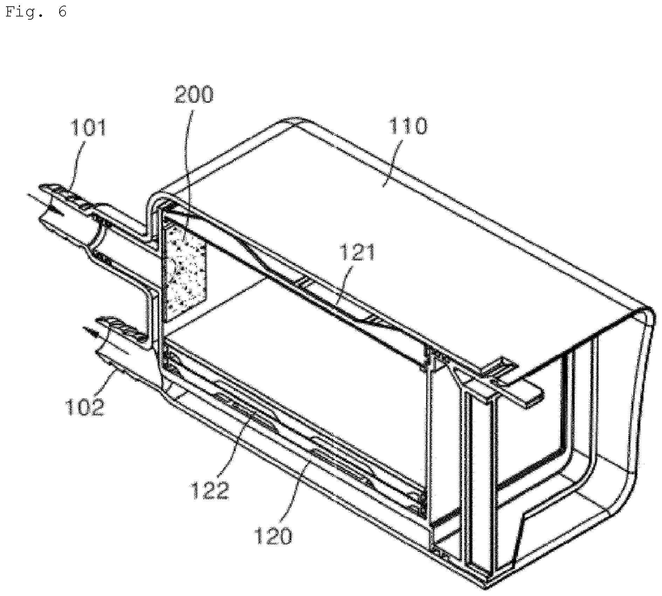

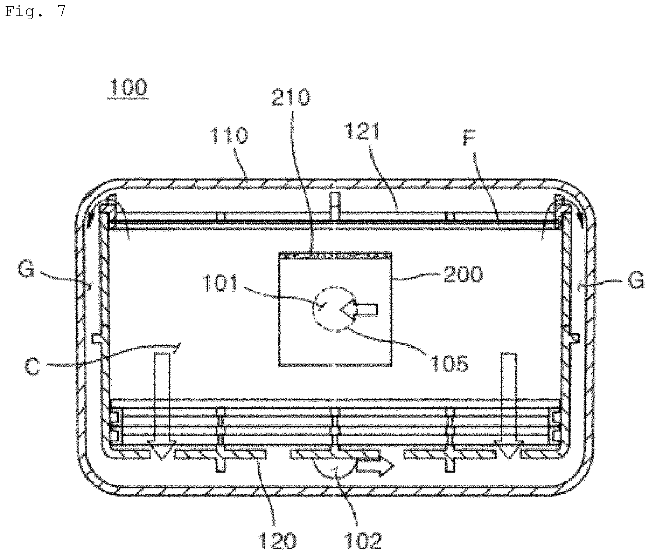

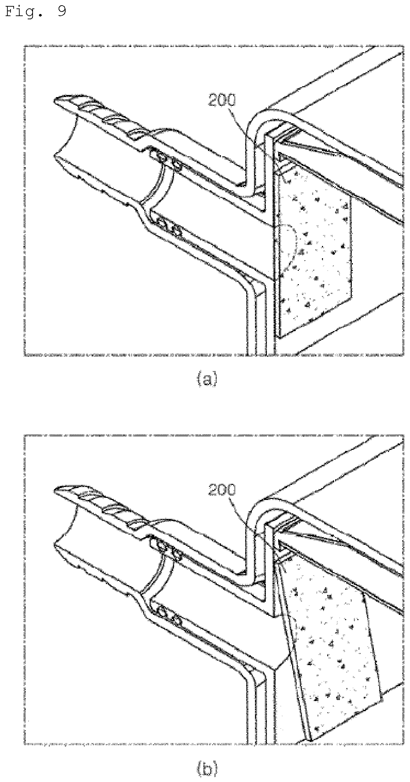

FIG. 1 shows a transparent perspective view of a washing machine to which a filter assembly according to an embodiment of the present invention is applied, FIGS. 2 to 4 show various views representing a filter assembly according to an embodiment of the present invention, FIG. 5 shows assembled and exploded perspective views of a filter assembly according to an embodiment of the present invention, and FIGS. 6 to 9 show cross-sectional views of a filter assembly to which a back flow prevention member according to an embodiment of the present invention is applied.

First, referring to FIGS. 2 to 4, the washing machine 10 including the filter assembly 100 according to the present invention includes a washing machine housing 11 constituting the external appearance of the washing machine, a laundry accommodation body 12 which is disposed inside the washing machine housing 11 and rotatably formed, and into which washing water supplied from the outside is introduced, a discharge pipe 13 which forms a fluid communication between the washing machine housing 11 and the laundry accommodation body 12, and through which the washing water discharged from the laundry accommodation body 12 flows, and a cylindrical filter assembly 100 disposed on the discharge pipe 13. Here, the filter assembly 100 may include a polygonal shape including a cylindrical shape as shown in FIGS. 2 to 4.

Referring to FIGS. 5 to 7, the washing machine 10 including the filter assembly 100 according to the present invention includes the washing machine housing 11 constituting the external appearance of the washing machine, the laundry accommodation body 12 which is disposed inside the washing machine housing 11 and rotatably formed, and into which washing water supplied from the outside is introduced, the discharge pipe 13 which forms the fluid communication between the washing machine housing 11 and the laundry accommodation body 12, and through which the washing water discharged from the laundry accommodation body 12 flows. The filter assembly 100 may have a rectangular structure and disposed on the discharge pipe 13.

Here, the filter assembly 100 includes a first filter case 110 in which an inlet 101 and an outlet 102 are formed as independent flow paths on one side thereof so that washing water is introduced thereinto from the outside and then filtered and discharged therefrom; a second filter case 120 disposed spaced apart by a predetermined distance from at least one surface of the inner peripheral surfaces of the first filter case 110, and having at least one filter part F provided in a stacked form in the inner space of the second filter case; and a foreign substance prevention part 200 provided to seal the inlet 101 of the first filter case 110, and preventing foreign substances such as microplastics, dust and the like included in the washing water introduced through the inlet 101 from flowing backward in the reverse direction to the inlet 101.

That is, according to the present invention, the foreign substance prevention part 200 may prevent the foreign substance from being re-introduced into the inlet 101 by being disposed at the end region of the inlet 101 for introduction into the second filter case 120, that is, a region where the end of the inlet 101 is connected to the inner surface of the second filter case 120. This foreign substance prevention part 200 will be described in more detail below.

Specifically, the washing machine housing 11 may be formed in a hexahedron shape constituting the external appearance of the washing machine. Inside the washing machine housing 11, the laundry accommodation body 12 having a hexahedral or cylindrical shape may be rotatably disposed.

Inside the laundry accommodation body 12, a space is formed for accommodating laundry objects such as clothes and the like, and the washing water may be introduced into the inner space of the laundry accommodation body 12. Therefore, the washing objects such as clothes and the like are washed by the washing water accommodated in the laundry accommodation body 12 of the washing machine 10 while being rotated in one direction or both directions. At this time, the filter assembly 100 capable of filtering out particles such as fine plastics may be disposed in the flow of the washing water discharged through the discharge pipe 13 after the washing has been performed in the laundry accommodation body 12.

The first filter case 110 may be formed in a cylindrical, rectangular or polygonal structure with its one side open, but is not limited thereto. The inlet 101 through which the washing water introduced is formed on a region opposite to the open region of the first filter case 100 at a predetermined height h, and the outlet 102 through which the filtered washing water is discharged may be formed on the lower surface region.

Here, the inlet 101 of the first filter case 110 may be formed at the height of about 50% or less of the total height of the first filter case 110. That is, according to the present invention, the inlet part 101 of the first filter case 110 is formed at the height of about 50% or less of the total height, so that it is possible to minimize the leakage or overflow of the washing water introduced through the inlet 101 due to irregular collisions with the inner peripheral surface of the first filter case 110 by water pressure. Preferably, it is appropriate that the inlet 101 of the first filter case 110 is formed at the height in the range from 30% to 50% of the total height of the first filter case 110. In some cases, the formation height of the inlet 101 of the first filter case 110 may be appropriately adjusted within the above range depending on the stacking height of the additional filter part F which may be disposed in the lower region of the first filter case 110.

Also, in some cases, the inlet 101 of the first filter case 110 may be independently detachable. Similarly, the outlet 102 of the first filter case 110 may also be independently detachable.

The second filter case 120 may be inserted into or removed from the open region of the first filter case 120 in a sliding manner. A handle part H may be formed on one side of the second filter case 120, so that the second filter case can be easily extracted or inserted while being held by the user. The second filter case 120 may be provided with an internal chamber space C formed therein, in which the washing water introduced through the inlet 101 of the first filter case 110 is accommodated.

The foreign substance prevention part 200 is formed in a plate shape. The foreign substance prevention part 200 may be formed in the second filter case 120 at a place where the inlet part 101 is connected to the second filter case while its one side is fixed thereto. The foreign substance prevention part 200 may be disposed in a shape to seal the end of the inlet 101 connected to the inner chamber space C of the second filter case 120.

That is, the foreign substance prevention part 200 according to the present invention may be attached to an inlet hole 105 with its one side part 210 fixed thereto, wherein the inlet hole is a region communicating with one end of the inlet 101 and the inner surface of the second filter case 120 connected from the one end. Thus, the foreign substance prevention part 200 can be provided to prevent the foreign substances or the like introduced through the inlet 101 of the first filter case 110 from flowing backward after having been introduced into the inner chamber space C of the second filter case 120.

There is no particular restriction on the structure of the foreign substance prevention part 200 as long as it is configured to prevent the back flow of the foreign substances or the like contained in the washing water after the washing water introduced into the inlet 101 of the first filter case 110 has been introduced into the inner chamber space C through the inlet hole 105 of the second filter case 120. For example, a hinge portion (not shown) may be formed on one side part 210 of the foreign substance prevention part 200 so as to be rotatable in only one direction. In some cases, there is no particular restriction on the structure as long as it can prevent the foreign substance from flowing backward into the inlet 101 through the foreign substance prevention part 200, and for example, it may be a structure in which the one side part 210 of the foreign substance prevention part 200 is formed in an inclined, bent, or curved shape with a predetermined angle.

Alternatively, the foreign substance prevention part 200 may be formed in both or any one of the first filter case 110 and the second filter case 120, or may be formed in the form of a plate-shaped film on the path of the inlet 101 through which the washing water flows. That is, the flow path of the inlet 101 may be opened and closed while the plate-shaped valve is naturally opened and closed in only one direction by the flow rate of the washing water.

While there is no particular restriction on the shape or material of the foreign substance prevention part 200 as long as it is capable of preventing the foreign substances contained in the washing water flowing by way of the inlet 101 from flowing backward, the foreign substance prevention part 200 may be formed preferably of a rubber material, silicone, or a mesh with predetermined pores formed therein, which provides a predetermined resilient force.

Furthermore, a sealing member (not shown) may be formed along the outer peripheral surface of the foreign substance prevention part 200 to prevent as much as possible the re-introduction into the inlet hole 105 of the washing water flowing by way of the inlet part 101. Therefore, when a phenomenon occurs in which foreign substances included in the washing water introduced through the inlet 101 of the first filter case 110 flow backward into the inlet hole 105, the sealing member formed on the outer peripheral portion of the foreign substance prevention part 200 is brought into close contact with the surrounding portion around the inlet hole 105 to guarantee sealing force, so that the foreign substances included in the washing water are blocked to prevent their back flow more effectively even though some of the washing water may flow toward the inlet 101.

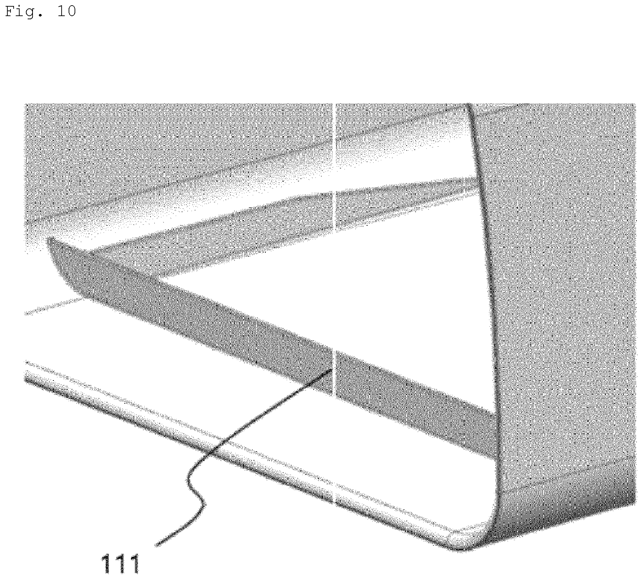

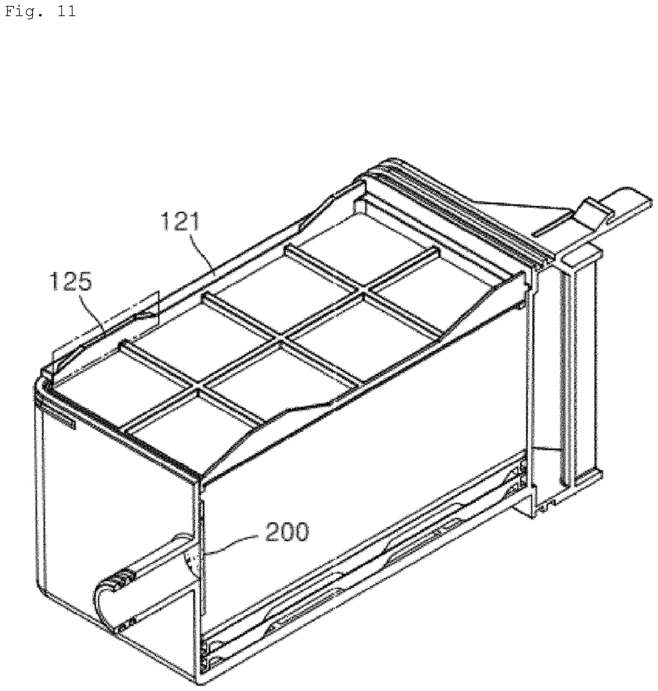

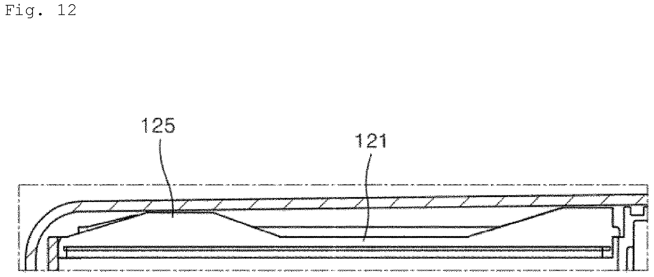

Meanwhile, FIG. 10 shows a partially enlarged view representing a filter assembly and a residual water prevention structure according to an embodiment of the present invention, and FIGS. 11 and 12 show enlarged views representing a filter case and a separation prevention structure according to an embodiment of the present invention.

Referring to these drawings, the second filter case 120 may be formed in a structure with its top surface open, and a filter mounting member 121 can form a top surface of the second filter case 120 in the open region of the second filter case 120, and can be detachably coupled thereto. It is obvious to those skilled in the art that the filter mounting member 121 may also be constructed to be integrally bonded to the top surface of the second filter case 120. In this case, the filter part F may be fixedly coupled to the filter mounting member 121 or may be easily interchangeably coupled to the filter mounting member 121.

In the filter mounting member 121, a filter mesh-shaped frame part 122 to allow the washing water to flow and a plurality of separation prevention structures (FIG. 11, 125) extending upward from the frame part 122 can be formed. In this regard, the separation prevention structure (FIG. 11, 125) may be formed in a shape that is curved upward and protrudes. Of course, there is no particular restriction on this separation prevention structure (FIG. 11, 125) as long as it can be stably supported when coupled to the first filter case 110.

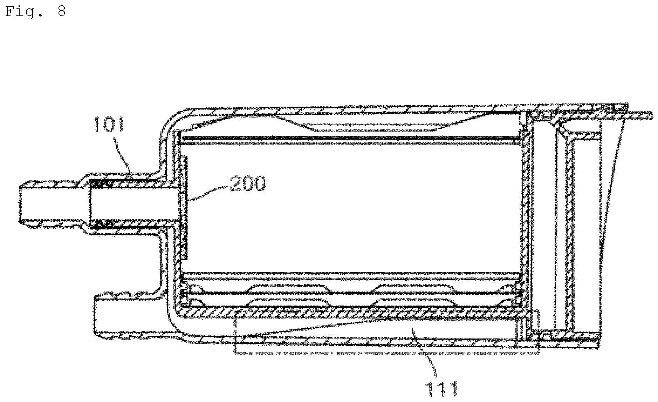

Therefore, when the second filter case 120 is coupled to the first filter case 110 in a sliding manner, the separation prevention structure (FIG. 8, 125) of the second filter case 120 is brought to close contact with the upper inner peripheral surface of the first filter case 110, thereby being stably coupled thereto without any gap therebetween.

Additionally, the second filter case 120 may be inserted into the first filter case 110 in a sliding manner, and a predetermined separation space G may be formed between the second filter case 120 and the first filter case 110. That is, the filter part F may be mounted on the filter mounting member 121 of the second filter case 120, and the washing water may be filtered through the filter part F and flow into the separation space G.

The filter part F may be disposed at an upper or lower region of the chamber space C of the second filter case 120. That is, the filter part F may be disposed on the inner surface of the chamber space C of the second filter case 120 except for the regions where the inlet 101 and the outlet 102 are formed. Therefore, after the washing water is introduced into the second filter case 110 of the filter assembly 100, it can be filtered through the filter part F and easily discharged therefrom. For example, the filter part F may be formed by bonding opposite ends of the sheet by hot melt bonding, thermal bonding or the like in order to realize the sheet shape into a cylindrical shape. Alternatively, of course, it may also be formed by an insert injection molding scheme.

The filter part F can filter out foreign substances contained in the washing water, for example, fine plastics or the like discharged in large quantities from fibers. The filter part F may be provided as an independent structure that is detachable from the washing machine 10. Therefore, when replacement or cleaning of the filter part F is required depending on the period of use or the like, the user can easily replace and clean the filter part F.

Preferably, the filter part F may be formed in a structure capable of filtering out even fine particles having a fine dimension less than 5 mm. In some cases, the filter part may have the fine dimension which enables the filtering out of ultra-fine plastic particles, and may be configured to filter out particles of 0.1 µm or less. In an example, the filter part F may be provided as a non-woven fabric formed to have a mesh net shape or a tubular or cylindrical shape in the form of one or two or more stacked layers of sheet material such as fabric, plastic, SUS, metal or the like. Of course, there is no particular restriction on the shape or material of this filter part F as long as the filter part can collect the fine fiber particles filtered out from the washing water.

In an example, the filter part F may be formed with a carbon block filter, a nano electrostatic sheet and a UF sheet which are disposed in the form of surrounding the outer circumferential surface of the carbon block filter. The carbon block filter may include active carbon, a binder, and an additive. The nano electrostatic sheet may include glass fiber, cellulose, alumina fiber, polypropylene (PP), and polyethylene (PE), and the UF sheet may include polysulfone (PSF), polyethersulfone (PES) and polyvinylidene fluoride (PVDF), polypropylene (PP) and polyethylene (PE).

In addition, the filter of the filter part F according to the present invention may be formed in a pouch shape in which a collection space is formed inside a pair of filters made of different materials with their outer peripheral regions bonded to each other. In an example, the filter of the different materials of the filter part F may be formed of, without limitation, a filter made of non-woven fabric on the upper side and a filter mesh having a 90 micron mesh structure on the lower side, in one example, to collect fine plastics and the like.

Hereinafter, the operation process of the foreign substance prevention part 200 of the filter assembly 100 according to the present invention described above will be described.

First, washing water is supplied to the washing tub of the washing machine 10. The supplied washing water is discharged to the outside of the washing machine 10 through a pipe or a hose after washing of clothes and the like is completed. The washing water discharged from the washing tub is introduced into the filter assembly 100 according to the present invention formed at the inner lower part, side surface, outer part, or the like of the washing machine 10 and is filtered before being discharged to the outside. At this time, since the filter cases 110 and 120 with the above-described filter parts F formed therein are disposed in the filter assembly 100, the washing water introduced after being discharged from the washing tub passes through the filter parts F, and fine fiber plastics can be filtered out.

That is, after the washing water is discharged from the washing tub, it is introduced through the inlet 101 formed at the middle region of the side surface of the first filter case 110 of the filter assembly 100. The introduced washing water is filtered while passing through the filter parts F formed inside the second filter case 120 and capable of filtration of fine plastics, and then, it is discharged to the outside through the outlet 102 formed on the lower side of the second filter case 120.

Here, the washing water introduced through the inlet 101 of the first filter case 110 is accommodated in the inner chamber space C of the second filter case 120. At this time, as described above, in order to prevent the washing water from flowing backward after having been introduced into the inner chamber space C, the foreign substance prevention part 200 may be formed in the inlet hole 105 region, that is, a region corresponding to the end of the inlet 101 among the inner peripheral surfaces of the inner chamber space C of the second filter case 120.

Since the foreign substance prevention part 200 is formed such that the one side part 210 is fixed to the inlet hole 105 of the second filter case 120 and the other region thereof is movable only in one direction, the washing water introduced through the inlet 101 of the first filter case 110 can bes easily introduced by rotating the foreign substance prevention part 200 in the one direction, and then the foreign substance prevention part 200 can tightly close the inlet hole 105 again to prevent the back flow phenomenon in which the washing water is re-introduced into the inlet 101 side.

Meanwhile, the washing water filtered through the filter part F disposed on the upper region of the second filter case 120 may be discharged to the outlet 102 via the separation space G formed between the first filter case 110 and the second filter case 120, and the washing water filtered through the plurality of filter parts F stacked in the lower region of the second filter case 120 may be discharged to the outlet 102 through the plurality of flow holes 129 formed at predetermined intervals in the lower portion of the second filter case 120. In this regard, there is no particular restriction on the shape, size and number of the flow holes 129, and for example, the second filter case 120 may include an outer frame-shaped structure in which a central region is a cavity of a predetermined size, and the cavity may be defined as a 'flow hole'.

In the above, an embodiment of the present invention has been described in detail with reference to the accompanying drawings Therefore, it should be understood that the true scope of the right of the present invention is determined by the claims described later.

### [List of reference signs]

| | | | |
|---|---|---|---|
| 10: | Washing machine | 11: | Washing machine housing |
| 12: | Laundry accommodation body | 13: | Discharge pipe |
| 100: | Filter assembly | 101: | Inlet |
| 102: | Outlet | 105: | Inlet hole |
| 110: | First filter case | 111: | Residual water prevention structure |
| 120: | Second filter case | 121: | Filter mounting member |
| 122: | Frame part | 125: | Separation prevention structure |
| 129: | Flow hole | 200: | Foreign substance prevention part |
| 210: | Location fixing part | C: | Chamber space |
| F: | Filter part | G: | Separation space |
| H: | Handle part | | |

## Claims

1. A filter assembly (100) comprising:
a first filter case (110) in which at least one inlet (101) and an outlet (102) are formed as independent flow paths, respectively, on one side thereof so that a washing water is introduced thereinto from the outside and then discharged therefrom while foreign substances are filtered out, and in which an inner space for receiving the washing water is formed;
a second filter case (120) disposed spaced apart by a predetermined distance from at least one surface of the inner peripheral surfaces of the first filter case (110), and provided with at least one filter part (F); and
a foreign substance prevention part (200) configured to open and close the inlet (101) and preventing the foreign substances from being introduced into the inlet (101),
wherein the foreign substance prevention part (200) is configured to be opened and closed by a water pressure of the washing water while at least a part thereof is fixed.

2. The filter assembly (100) of claim 1, wherein the foreign substance prevention part is formed in a plate-shaped plate shape or valve form.

3. The filter assembly (100) of claim 1, wherein the foreign substance prevention part (200) includes, as at least a portion thereof, a rubber material, silicone or mesh which provides a predetermined resilient restoring force.

4. The filter assembly (100) of claim 1, wherein the foreign substance prevention part (200) includes a structure formed at an inlet region of the washing water introduced into the second filter case (120) or disposed on a path of the inlet (101).

5. The filter assembly (100) of claim 1, wherein the filter part (F) of the second filter case (120) is fixedly or detachably coupled to a filter mounting member (121) forming an upper surface of the second filter case (120), and
wherein the filter part (F) is configured to filter the washing water, which flows into a distance part as the distance spaced apart from the first filter case (110) and is discharged to the outlet (102).

6. The filter assembly (100) of claim 4, wherein the filter mounting member (121) includes:
a filter mesh-shaped frame part (122) to allow the washing water to flow therethrough; and
at least one separation prevention structure (125) extending from one side of the frame part (122).

7. The filter assembly (100) of claim 5, wherein the separation prevention structure (125) includes a structure extending from the one side of the frame part (122) and in close contact with an upper inner surface of the first filter case (110).

8. The filter assembly (100) of claim 1, wherein one surface of the first filter case (110) is open, and the second filter case (120) includes a structure capable of being inserted into or extracted from an open region of the first filter case (110).

9. The filter assembly (100) of claim 1, further comprising a residual water prevention structure (111) for preventing leakage of the washing water, which is formed on a lower surface of the first filter case (110).

10. The filter assembly (100) of claim 1, wherein the filter part (F) is formed of a sheet material of non-woven fabric, fabric, plastic, SUS or metal, and includes a mesh structure.

11. The filter assembly (100) of claim 1, wherein the filter part (F) is provided as a non-woven fabric formed to have a mesh net shape or a tubular or cylindrical shape in the form of one or two or more stacked layers of sheet material, so that the filter part (F) is formed in a structure capable of filtering out fine particles having a fine dimension less than 5 mm.

12. A washing machine (10) comprising:
a washing machine housing (11) constituting an external appearance of the washing machine (10),
a laundry accommodation body (12) which is disposed inside the washing machine housing (11) and rotatably formed, and into which washing water supplied from the outside is introduced,
a discharge pipe (13) which forms a fluid communication between the washing machine housing (11) and the laundry accommodation body (12), and through which the washing water discharged from the laundry accommodation body flows, and
a filter assembly (100) of claim 1 disposed on the discharge pipe (13).

## Patentansprüche

1. Filteranordnung (100), umfassend:
ein erstes Filtergehäuse (110), in dem zumindest ein Einlass (101) und ein Auslass (102) als jeweils unabhängige Strömungspfade an einer Seite davon ausgebildet sind, so dass Waschwasser von außen in dieses eingeleitet und anschließend aus diesem ausgeleitet wird, während Fremdstoffe herausgefiltert werden, und in dem ein Innenraum zur Aufnahme des Waschwassers ausgebildet ist;
ein zweites Filtergehäuse (120), das in einem vorbestimmten Abstand von zumindest einer Oberfläche der inneren Umfangsoberflächen des ersten Filtergehäuses (110) angeordnet und mit zumindest einem Filterteil (F) versehen ist; und
ein Fremdstoffverhinderungsteil (200), das so konfiguriert ist, dass es den Einlass (101) öffnet und schließt und verhindert, dass die Fremdstoffe in den Einlass (101) gelangen,
wobei das Fremdstoffverhinderungsteil (200) so konfiguriert ist, dass es durch den Wasserdruck des Waschwassers geöffnet und geschlossen wird, während zumindest ein Teil davon feststehend angeordnet ist.

2. Filteranordnung (100) nach Anspruch 1, wobei das
Fremdstoffverhinderungsteil in Form einer plattenförmigen Platte oder eines Ventils ausgebildet ist.

3. Filteranordnung (100) nach Anspruch 1, wobei das
Fremdstoffverhinderungsteil (200) zumindest teilweise ein Gummimaterial, Silikon oder ein Maschengewebe umfasst, das eine vorbestimmte elastische Rückstellkraft bereitstellt.

4. Filteranordnung (100) nach Anspruch 1, wobei das
Fremdstoffverhinderungsteil (200) eine Struktur aufweist, die an einem Einlassbereich des in das zweite Filtergehäuse (120) eingeleiteten Waschwassers oder auf einem Pfad des Einlasses (101) angeordnet ist.

5. Filteranordnung (100) nach Anspruch 1, wobei das Filterteil (F) des zweiten Filtergehäuses (120) fest oder lösbar mit einem Filterbefestigungselement (121) gekoppelt ist, das eine obere Oberfläche des zweiten Filtergehäuses (120) bildet, und
wobei das Filterteil (F) so konfiguriert ist, dass es das Waschwasser filtert, das in einen Abstandsteil, der von dem ersten Filtergehäuse (110) in einem Abstand angeordnet ist, strömt und zum Auslass (102) ausgeleitet wird.

6. Filteranordnung (100) nach Anspruch 4, wobei das Filterbefestigungselement (121) umfasst:
ein maschenförmiges Filterrahmenteil (122), das das Waschwasser hindurchströmen lässt; und
zumindest eine Trennungsverhinderungsstruktur (125), die sich von einer Seite des Rahmenteils (122) erstreckt.

7. Filteranordnung (100) nach Anspruch 5, wobei die
Trennungsverhinderungsstruktur (125) eine Struktur umfasst, die sich von der einen Seite des Rahmenteils (122) erstreckt und in engem Kontakt mit einer oberen inneren Oberfläche des ersten Filtergehäuses (110) steht.

8. Filteranordnung (100) nach Anspruch 1, wobei eine Oberfläche des ersten Filtergehäuses (110) offen ist und das zweite Filtergehäuse (120) eine Struktur umfasst, die in einen offenen Bereich des ersten Filtergehäuses (110) eingesetzt oder aus diesem entnommen werden kann.

9. Filteranordnung (100) nach Anspruch 1, weiterhin umfassend eine Restwasserverhinderungsstruktur (111) zum Verhindern des Auslaufens des Waschwassers, die an einer unteren Oberfläche des ersten Filtergehäuses (110) ausgebildet ist.

10. Filteranordnung (100) nach Anspruch 1, wobei das Filterteil (F) aus einem bahnförmigen Material aus Vliesstoff, Gewebe, Kunststoff, SUS oder Metall gebildet ist und eine Maschenstruktur aufweist.

11. Filteranordnung (100) nach Anspruch 1, wobei das Filterteil (F) als Vliesstoff bereitgestellt ist, der so ausgebildet ist, dass er eine Maschennetzform oder eine röhrenförmige oder zylindrische Form in Form einer oder zwei oder mehr gestapelter Schichten eines bahnförmigen Materials aufweist, so dass das Filterteil (F) in einer Struktur ausgebildet ist, die feine Partikel mit einer feinen Abmessung von weniger als 5 mm herausfiltern kann.

12. Waschmaschine (10), umfassend:
ein Waschmaschinengehäuse (11), das das äußere Erscheinungsbild der Waschmaschine (10) bildet,
einen Wäscheaufnahmekörper (12), der im Inneren des Waschmaschinengehäuses (11) angeordnet ist und drehbar ausgebildet ist und in den von außen zugeführtes Waschwasser eingeleitet wird,
ein Auslassrohr (13), das eine Fluidverbindung zwischen dem Waschmaschinengehäuse (11) und dem Wäscheaufnahmekörper (12) bildet und durch das das aus dem Wäscheaufnahmekörper ausgeleitete Waschwasser strömt, und
eine Filteranordnung (100) nach Anspruch 1, die an dem Auslassrohr (13) angeordnet ist.

## Revendications

1. Unité de filtre (100), comprenant :
un premier boîtier de filtre (110) où au moins une entrée (101) et une sortie (102) sont respectivement formées en tant que chemins d'écoulement indépendants sur un côté de celui-ci, de sorte qu'une eau de lavage est introduite depuis l'extérieur, puis évacuée tandis que des substances étrangères sont filtrées, et où un espace intérieur est formé pour recevoir l'eau de lavage ;
un deuxième boîtier de filtre (120) disposé à une distance prédéterminée d'au moins une des surfaces périphériques intérieures du premier boîtier de filtre (110), et pourvu d'au moins une partie de filtre (F) ; et
une partie de prévention de substances étrangères (200) prévue pour ouvrir et fermer l'entrée (101) et empêcher les substances étrangères d'être introduites dans l'entrée (101),
où la partie de prévention de substances étrangères (200) est prévue pour être ouverte et fermée par une pression de l'eau de lavage, au moins une partie de celle-ci étant fixée.

2. Unité de filtre (100) selon la revendication 1, où la partie de prévention de substances étrangères est en forme de plaque ou de valve.

3. Unité de filtre (100) selon la revendication 1, où la partie de prévention de substances étrangères (200) comprend, au moins en tant que partie de celle-ci, un matériau en caoutchouc, silicone ou maille présentant une force de rappel élastique prédéterminée.

4. Unité de filtre (100) selon la revendication 1, où la partie de prévention de substances étrangères (200) comporte une structure formée sur une zone d'entrée de l'eau de lavage introduite dans le deuxième boîtier de filtre (120), ou disposée sur un chemin de l'entrée (101).

5. Unité de filtre (100) selon la revendication 1, où la partie de filtre (F) du deuxième boîtier de filtre (120) est accouplée de manière fixe ou amovible à un élément de montage de filtre (121) formant une surface supérieure du deuxième boîtier de filtre (120), et
où la partie de filtre (F) est prévue pour filtrer l'eau de lavage s'écoulant dans une partie distante de la distance d'espacement au premier boîtier de filtre (110) et refoulée vers la sortie (102).

6. Unité de filtre (100) selon la revendication 4, où l'élément de montage du filtre (121) comprend :
une partie de cadre en forme de toile filtrante (122) pour permettre le passage de l'eau de lavage ; et
au moins une structure de prévention de séparation (125) s'étendant depuis un premier côté de la partie de cadre (122).

7. Unité de filtre (100) selon la revendication 5, où la structure de prévention de séparation (125) comprend une structure s'étendant depuis le premier côté de la partie de cadre (122) et en contact étroit avec une surface intérieure supérieure du premier boîtier de filtre (110).

8. Unité de filtre (100) selon la revendication 1, où une surface du premier boîtier de filtre (110) est ouverte, et où le deuxième boîtier de filtre (120) comporte une structure apte à être insérée dans une zone ouverte du premier boîtier de filtre (110) ou extraite de celle-ci.

9. Unité de filtre (100) selon la revendication 1, comprenant en outre une structure de prévention d'eau résiduelle (111) pour empêcher la fuite de l'eau de lavage, formée sur une surface inférieure du premier boîtier de filtre (110).

10. Unité de filtre (100) selon la revendication 1, où la partie de filtre (F) est constituée d'un matériau en feuille de tissu non tissé, de tissu, de plastique, de SUS ou de métal, et comporte une structure en treillis.

11. Unité de filtre (100) selon la revendication 1, où la partie de filtre (F) est présentée sous forme d'un tissu non tissé prévu pour avoir une forme de filet à mailles ou une forme tubulaire ou cylindrique avec une, deux ou plusieurs couches de matériau en feuille superposées, de sorte que ladite partie de filtre (F) est formée dans une structure apte à filtrer des particules fines ayant une dimension inférieure à 5 mm.

12. Machine à laver (10), comprenant :
une carrosserie de machine à laver (11) constituant une apparence externe de ladite machine à laver (10),
un corps de réception de linge (12) disposé à l'intérieur du boîtier de machine à laver (11) et prévu de manière rotative, où est introduite de l'eau de lavage provenant de l'extérieur,
une conduite de refoulement (13) formant une communication fluidique entre la carrosserie de machine à laver (11) et le corps de réception de linge (12), et par laquelle s'écoule l'eau de lavage refoulée du corps de réception de linge, et
une unité de filtre (100) selon la revendication 1, disposée sur la conduite de refoulement (13).
